(19) Europäisches Patentamt
European Patent Office
Office européen des brevets

(11) **EP 2 019 934 B1**

(12) **EUROPÄISCHE PATENTSCHRIFT**

(45) Veröffentlichungstag und Bekanntmachung des Hinweises auf die Patenterteilung:
**25.05.2011 Patentblatt 2011/21**

(21) Anmeldenummer: **07728481.8**

(22) Anmeldetag: **25.04.2007**

(51) Int Cl.:
*F16D 48/06* (2006.01)

(86) Internationale Anmeldenummer:
**PCT/EP2007/054025**

(87) Internationale Veröffentlichungsnummer:
**WO 2007/134940 (29.11.2007 Gazette 2007/48)**

(54) **VERFAHREN ZUM BETRIEB EINER AUTOMATISIERTEN REIBUNGSKUPPLUNG**

METHOD FOR OPERATING AN AUTOMATIC FRICTION CLUTCH

PROCÉDÉ DE FONCTIONNEMENT D'UN EMBRAYAGE À FRICTION AUTOMATIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **24.05.2006 DE 102006024290**

(43) Veröffentlichungstag der Anmeldung:
**04.02.2009 Patentblatt 2009/06**

(73) Patentinhaber: **ZF Friedrichshafen AG
88038 Friedrichshafen (DE)**

(72) Erfinder:
• **PETZOLD, Rainer
  88045 Friedrichshafen (DE)**
• **HERTER, Peter
  88212 Ravensburg (DE)**
• **BITZER, Franz
  88048 Friedrichshafen (DE)**

(56) Entgegenhaltungen:
**WO-A-2005/057039          DE-A1- 10 312 088
DE-A1-102005 040 578**

**Beschreibung**

Die Erfindung betrifft ein Verfahren zum Betrieb einer automatisierten Reibungskupplung gemäß dem Oberbegriff des Patentanspruchs 1. Ein gattungsgemäßes Verfahren ist aus WO 2005/057039 A bekannt.

Automatisierte Reibungskupplungen, also auf Reibung basierende Kupplungen, die nicht unmittelbar durch einen Bediener betätigt werden, sind seit geraumer Zeit insbesondere in Kraftfahrzeugen im Einsatz. Die vorliegende Erfindung wird deshalb im folgenden am Beispiel einer Kraftfahrzeugkupplung beschrieben, sie ist jedoch nicht auf Kraftfahrzeugkupplungen beschränkt, sondern grundsätzlich bei allen Kupplungen einsetzbar, die bei verschiedenen Kupplungsvorgängen jeweils unterschiedlichen Kupplungsbeanspruchungen unterliegen können.

Insbesondere bei Kraftfahrzeugen mit automatisierten Schaltgetrieben sind automatisierte Reibungskupplungen regelmäßig bei Gangwechseln und Anfahrvorgängen aktiv. Daneben werden diese jedoch auch zunehmend in Fahrzeugen mit manuell schaltbaren Getrieben eingesetzt. Bei diesen wird der Gangwunsch direkt vom Fahrer zumeist in Form eines elektrischen oder elektronischen Signals erkennbar gemacht, welches durch eine Steuerungsvorrichtung entsprechend aufbereitet wird und letztlich die Ansteuerung von Aktuatoren bewirkt, welche den eigentlichen Kupplungs- und Schaltvorgang steuern.

Selbst in solchen Fällen, in denen ein durch den Fahrer zu betätigendes Kupplungspedal vorgesehen ist, bietet die Steuerung der Kupplungsposition durch Aktuatoren verschiedene Vorteile in Bezug auf die vom Fahrer aufzubringenden Kräfte, auf Pedalwege, auf die Genauigkeit der Einstellung der Kupplung und insbesondere bei besonderen Zuständen des Fahrzeuges, des Getriebes oder der Kupplung selbst. Üblicherweise sind die Steuerungen automatisierter Reibungskupplungen so ausgelegt, dass sich möglichst tisierter Reibungskupplungen so ausgelegt, dass sich möglichst vorteilhafte Fahreigenschaften des Fahrzeuges ergeben. Hierzu gehört beispielsweise, dass bei Anfahrvorgängen ein relativ großzügiger Schlupfbereich der Reibungskupplung vorgesehen ist, der einem Fahrer zum einen eine genaue Dosierung der Geschwindigkeitszunahme des Fahrzeuges sowie einen komfortablen Rangierbetrieb ermöglicht, und ihn zum zweiten selbst an relativ großen Steigungen in die Lage versetzt, das Fahrzeug durch Betätigung des Gaspedals und ohne Betätigung einer Bremse für einen kurzen Zeitraum im Stillstand zu halten.

Die Auslegung der Steuerung für die automatisierte Kupplung wird dabei im Allgemeinen so getroffen, dass diese für durchschnittlich zu erwartende Anfahrsituationen bzw. Kupplungsvorgänge optimiert ist.

Insbesondere bei mittleren und schweren Nutzfahrzeugen können die Anfahrsituationen beispielsweise in Abhängigkeit von der aktuellen Beladung und der Fahrbahnneigung jedoch in einem weiten Bereich variieren, so dass die Kupplung vielfach unterhalb oder oberhalb ihres Auslegüngsbereiches und damit unterhalb bzw. oberhalb der vorgesehenen Kupplungsbeanspruchung operiert.

Wenn eine Kupplung über eine längere Zeit unterhalb der vorgesehenen Kupplungsbeanspruchung operiert, dann führt dies zum so genannten "Verglasen" des Kupplungsbelages. Ein Verglasen wiederum hat einen negativen Reibwertverlauf zur Folge, d.h. der Reibwert der Kupplung nimmt mit zunehmender Gleitgeschwindigkeit ab. Negative Reibwertverläufe sind eine Ursache für das so genannte Kupplungsrupfen, welches sich durch Schwingungen im Antriebsstrang bemerkbar macht. Insbesondere aus Gründen des Fahrkomforts soll ein Kupplungsrupfen vermieden werden.

Wenn eine Kupplung dagegen über eine längere Zeit oberhalb ihres Auslegungsbereiches bzw. der vorgesehenen Kupplungsbeanspruchung betrieben wird, dann führt dies zu einem vorzeitigen Kupplungsverschleiß, den es verständlicherweise ebenfalls zu vermeiden gilt.

Die Kupplungsbeanspruchung ist bekanntlich eine Funktion der während der Schlupfphase eines Kupplungsvorganges in die Kupplung eingetragenen Energie. Diese Energie kann aus dem Produkt aus Antriebsmoment, Schlupfdrehzahl und Schlupf-Betriebszeit ermittelt werden. Die Schlupfdrehzahl entspricht der Differenz der Kupplungseingangsdrehzahl und der Kupplungsausgangsdrehzahl. Die eingetragene Energie lässt sich somit nach der Gleichung

$$E = M * (n_{ein} - n_{aus}) * t$$

berechnen.

In dieser Gleichung bedeuten

E      die Energie, die die Kupplung als Reibleistung aufnimmt,
M     das Eingangsdrehmoment,
$n_{ein}$    die Eingangsdrehzahl,
$n_{aus}$   die Ausgangsdrehzahl der Kupplung und
t      die Schlupf-Betriebszeit.

Es ist daher zu erkennen, dass die in die Kupplung eingetragene Energie über das Eingangsdrehmoment, die Differenz zwischen Eingangsdrehzahl und Ausgangsdrehzahl und über die Schlupf-Betriebszeit beeinflusst werden kann. Vor diesem Hintergrund ist es grundsätzlich bereits bekannt, die Kupplungsbeanspruchung bzw. den Energieeintrag in eine Kupplung zu überwachen und den Kupplungsbetrieb in Abhängigkeit von der ermittelten Kupplungsbeanspruchung zu steuern.

So zeigt die DE 33 34 725 A1 eine Einrichtung zum Schutz einer Kupplung gegen Überhitzung, bei der ein von der Kupplung übertragenes bzw. durch einen Antriebsmotor in eine Kupplung eingebrachtes Drehmoment sowie die Differenz zwischen einer Kupplungseingangsdrehzahl und einer Kupplungsausgangsdrehzahl ermittelt, das Produkt daraus gebildet und diesem Produkt mit Hilfe einer Tabelle eine Warnruhezeit zugeordnet wird. Die jeweils aktuelle Schlupf-Betriebszeit wird mit der Warnruhezeit verglichen und bei Überschreitung der Warnruhezeit ein Warnsignal erzeugt. Auf diese Weise soll eine Überhitzung der Kupplung vermieden werden.

Aus der DE 103 12 088 A1 ist ein Verfahren zum Betrieb eines Antriebsstranges eines Kraftfahrzeuges bekannt, bei dem der Energieeintrag oder die Temperatur einer Kupplung überwacht und bei Überschreitung von Grenzwerten das Eingangsdrehmoment der Kupplung reduziert wird. Auch dieses Verfahren dient dazu, Beschädigungen sowie Übertemperaturen an der Reibungskupplung zu vermeiden.

Bei beiden genannten Druckschriften wird jeweils ein aktueller Kupplungsvorgang überwacht, um eine Beschädigung der Kupplung während dieses aktuellen Kupplungsvorganges zu vermeiden. Die Erfassung einer sich beispielsweise über eine längere Betriebszeit einstellenden durchschnittlichen Kupplungsbeanspruchung als Maß für eine sich daraus ergebende Verglasung oder einen übermäßigen Verschleiß der Kupplung ist bei den in den oben genannten Druckschriften beschriebenen Einrichtungen und Verfahren nicht vorgesehen und auch nicht möglich.

Vor diesem Hintergrund liegt der Erfindung die Aufgabe zugrunde, ein Verfahren zum Betrieb einer automatisierten Reibungskupplung vorzustellen, mit welchem eine sich beispielsweise über eine längere Betriebszeit einstellende Verglasung der Kupplungsbeläge bzw. deren übermäßiger Verschleiß de Verglasung der Kupplungsbeläge bzw. deren übermäßiger Verschleiß behoben werden kann.

Die Lösung dieser Aufgabe ergibt sich aus den Merkmalen des Hauptanspruches, während vorteilhafte Ausgestaltungen und Weiterbildungen der Erfindung den Unteransprüchen entnehmbar sind. Der Begriff "durchschnittliche Kupplungsbeanspruchung" ist dabei so zu verstehen, dass etwa bei einem oder mehreren aufeinander folgenden Kupplungsvorgängen oder gegebenenfalls bei allen Kupplungsvorgängen seit In-Dienst-Stellung der Kupplung die gesamte, dem Energieeintrag entsprechende Kupplungsbelastung, bezogen auf die gesamte Schlupf-Betriebszeit, ermittelt wird. Diese Kupplungsbelastung wird dann mit einer vorgegebenen Durchschnitts-Kupplungsbelastung verglichen, und bei einer Abweichung der ermittelten von der vorgegebenen Kupplungsbelastung wird in der erfindungsgemäßen Weise bei den nächsten Kupplungsvorgängen reagiert.

Der Erfindung liegt die Erkenntnis zugrunde, dass sich ein durch unterdurchschnittlichen bzw. überdurchschnittlichen Energieeintrag möglicherweise verursachter Schaden an der Kupplung durch eine gezielte Erhöhung bzw. Verringerung des Energieeintrages in die Kupplung reduzieren bzw. beheben lassen sollte.

Demnach geht die Erfindung aus von einem Verfahren zum Betrieb einer automatisierten Reibungskupplung, bei welchem eine einem Energieeintrag entsprechende Kupplungsbeanspruchung ermittelt und ein Betrieb der Kupplung in Abhängigkeit von der ermittelten Kupplungsbeanspruchung gesteuert wird.

Zur Lösung der gestellten Aufgabe ist dabei vorgesehen, dass eine durchschnittliche Kupplungsbeanspruchung, bezogen auf eine Schlupf-Betriebszeit der Kupplung, ermittelt wird, und dass bei einer unter einem vorgegebenen Grenzwertbereich liegenden Kupplungsbeanspruchung ein Betrieb mit erhöhter Kupplungsbeanspruchung, bei einer über dem Grenzwertbereich liegenden Kupplungsbeanspruchung ein Betrieb mit verringerter Kupplungsbeanspruchung, jeweils bis zum Wiedererreichen des Grenzwertbereiches, angesteuert wird.

Ein Unterschreiten oder ein Überschreiten der durchschnittlichen Kupplungsbeanspruchung wird demnach erfindungsgemäß durch einen gezielten Energieeintrag kompensiert, um so die Kupplungsbeanspruchung in einem vorgegebenen Grenzwertbereich zu halten.

Gemäß einer bevorzugten Ausgestaltung der Erfindung ist vorgesehen, dass die durchschnittliche Kupplungsbeanspruchung mittels des durchschnittlichen Energieeintrages ermittelt wird. Dazu werden bei jedem Kupplungsvorgang die Energieeinträge in der weiter vorne geschilderten Weise berechnet oder gemessen, und es werden die über eine längere Betriebszeit sich ergebenden Energieeinträge, bezogen auf die zugehörigen Schlupf-Betriebszeiten, ermittelt. Die sich ergebenden Werte stellen ein Maß für die durchschnittliche Kupplungsbeanspruchung dar. Weicht diese von einem vorgegebenen Grenzwertbereich nach unten oder nach oben ab, dann wird der Energieeintrag durch eine geeignete Beeinflussung der den Energieeintrag bestimmenden Parameter erhöht bzw. erniedrigt, bis der Grenzwertbereich wieder erreicht ist.

Ein anderer Weg, die Kupplungsbeanspruchung zu ermitteln, ist, das Betriebsverhalten der Kupplung zu beobachten und aus diesem Betriebsverhalten auf den Kupplungszustand zu schließen. So kann insbesondere eine unter dem Grenzwertbereich liegende durchschnittliche Kupplungsbeanspruchung über das Rupf-Verhalten der Kupplung ermittelt werden. Wie weiter vorne bereits ausgeführt wurde, führt ein über eine längere Betriebsdauer unterdurchschnittlicher Energieeintrag zu dem "Verglasen" des Kupplungsbelages, wodurch sich ein negativer Reibwertverlauf ergibt, der wiederum eine Ursache für das Kupplungsrupfen ist. Auf das Rupf-Verhalten der Kupplung kann beispielsweise durch die Messung von Antriebsstrangschwingungen geschlossen werden.

Gemäß einer weiteren Ausgestaltung der Erfindung wird eine über dem Grenzwertbereich liegende durchschnittliche Kupplungsbeanspruchung über den Kupplungsverschleiß ermittelt, der in an sich bekannter Weise z.B. über die Endstellung der vollständig geschlossenen Kupplung feststellbar ist.

Wie weiter vorne bereits dargelegt wurde, kann der Energieeintrag grundsätzlich über die den Energieeintrag bestimmenden Parameter beeinflusst werden nämlich das Eingangsdrehmoment, die Differenz zwischen Eingangsdrehzahl und Ausgangsdrehzahl der Kupplung sowie die Schlupf-Betriebszeit.

Zudem wurde bereits erwähnt, dass automatisierte Reibungskupplungen vielfach in Verbindung mit einem automatisierten oder automatischen Schaltgetriebe eingesetzt werden, wobei die Kupplung und das Getriebe durch eine übergeordnete Steuerung angesteuert werden. Insbesondere bei schweren Nutzfahrzeugen mit bis zu 12 oder 18 Gängen können im Allgemeinen mehrere Gänge als Anfahrgänge eingesetzt werden. Die Anwahl des jeweiligen Anfahrganges erfolgt in Abhängigkeit von der aktuellen Fahrsituation, also beispielsweise vom Beladungszustand des Fahrzeuges, von der Neigung des Abstellplatzes usw. Eine übergeordnete Steuerung ermittelt die die Fahrsituation kennzeichnenden Bedingungen und bestimmt im Normalbetrieb einen für diese Bedingungen optimalen Anfahrgang.

Bei einem derartigen Fahrzeug ist gemäß einer bevorzugten Ausgestaltung der Erfindung vorgesehen, dass ein Betrieb mit erhöhter Kupplungsbeanspruchung durch Anwählen von über dem für die aktuelle Fahrsituation optimalen Anfahrgang liegenden Anfahrgängen, ein Betrieb mit verringerter Kupplungsbeanspruchung dementsprechend durch Anwählen von unter dem für die aktuelle Fahrsituation optimalen Anfahrgang liegenden Anfahrgängen durchgeführt wird. Wenn demnach infolge einer unterdurchschnittlichen Kupplungsbeanspruchung die Kupplungsbeläge verglast sind, dann kann bewusst durch die Anwahl von höheren, also über dem optimalen Anfahrgang liegenden Anfahrgängen der Energieeintrag in die Kupplung erhöht werden, welches dazu führt, dass die Verglasungsschicht abgetragen und damit der Verglasungszustand aufgehoben wird.

Wird demgegenüber eine überdurchschnittliche Kupplungsbeanspruchung ermittelt, dann wird in entsprechender Weise der Energieeintrag in die Kupplung durch Anwählen von unter dem optimalen Anfahrgang liegenden Anfahrgängen verringert, bis der vorgegebene Grenzwertbereich wieder erreicht ist.

Es hat sich gezeigt, dass im Allgemeinen eine verhältnismäßig kurzzeitige Erhöhung bzw. Verringerung des Energieeintrages (wenige Anfahrvorgänge) ausreicht, um den vorgegeben Grenzwertbereich wieder zu erreichen.

**Patentansprüche**

1. Verfahren zum Betrieb einer automatisierten Reibungskupplung, bei welchem eine einem Energieeintrag entsprechende Kupplungsbeanspruchung ermittelt und ein Betrieb der Kupplung in Abhängigkeit von der ermittelten Kupplungsbeanspruchung angesteuert wird, **dadurch gekennzeichnet, dass** eine durchschnittliche Kupplungsbeanspruchung, bezogen auf eine Schlupf-Betriebszeit der Kupplung, ermittelt wird, und dass bei Feststellung einer unter einem vorgegebenen Grenzwertbereich liegenden Kupplungsbeanspruchung anschließend ein Betrieb mit erhöhter Kupplungsbeanspruchung, bei Feststellung einer über dem Grenzwertbereich liegenden Kupplungsbeanspruchung ein Betrieb mit verringerter Kupplungsbeanspruchung, jeweils bis zum Wiedererreichen des Grenzwertbereiches, angesteuert wird.

2. Verfahren nach Anspruch 1, **dadurch gekennzeichnet, dass** die durchschnittliche Kupplungsbeanspruchung mittels des durchschnittlichen Energieeintrages in die Kupplung ermittelt wird.

3. Verfahren nach Anspruch 1 oder 2, **dadurch gekennzeichnet dass** die durchschnittliche Kupplungsbeanspruchung über das Betriebsverhalten der Kupplung ermittelt wird.

4. Verfahren nach Anspruch 3, **dadurch gekennzeichnet, dass** eine unter dem Grenzwertbereich liegende durchschnittliche Kupplungsbeanspruchung über das Rupf-Verhalten der Kupplung ermittelt wird.

5. Verfahren nach zumindest einem der Ansprüche 1 bis 4, **dadurch gekennzeichnet , dass** eine über dem Grenzwertbereich liegende durchschnittliche Kupplungsbeanspruchung über den Kupplungsverschleiß ermittelt wird.

6. Verfahren nach zumindest einem der Ansprüche 1 bis 5, für eine mit einem automatischen oder automatisierten Schaltgetriebe mit mehreren automatisch in Abhängigkeit von der aktuellen Fahrsituation anwählbaren Anfahrgängen zusammenwirkende Reibungskupplung, **dadurch gekennzeichnet, dass** ein Betrieb mit erhöhter Kupplungsbeanspruchung durch Anwählen von über dem für die aktuellen Fahrsituation optimalen Anfahrgang liegenden Anfahrgängen, ein Betrieb mit verringerter Kupplungsbeanspruchung durch Anwählen von unter dem für die aktuelle Fahrsituation optimalen Anfahrgang liegenden Anfahrgängen durchgeführt wird.

**Claims**

1. Method for operating an automatic friction clutch, in which method a clutch loading corresponding to an energy input is determined and an operating mode of the clutch is activated as a function of the determined clutch loading, **characterized in that** an average clutch loading in relation to a slippage operating time of the clutch is determined, and **in that** if a clutch loading below a predefined limit value range is detected, an operating mode with increased clutch loading is subsequently activated, and if a clutch loading above the limit value range is detected, an operating mode with reduced clutch loading is activated, in each case until the limit value range is attained again.

2. Method according to Claim 1, **characterized in that** the average clutch loading is determined by means of the average energy input into the clutch.

3. Method according to Claim 1 or 2, **characterized in that** the average clutch loading is determined by means of the operating behaviour of the clutch.

4. Method according to Claim 3, **characterized in that** an average clutch loading below the limit value range is determined by means of the juddering behaviour of the clutch.

5. Method according to at least one of Claims 1 to 4, **characterized in that** an average clutch loading above the limit value range is determined by means of the clutch wear.

6. Method according to at least one of Claims 1 to 5, for a friction clutch which interacts with an automatic or automated shift gearbox with a plurality of starting gears that can be selected automatically as a function of the present driving situation, **characterized in that** operation with increased clutch loading is carried out by selecting starting gears higher than the optimum starting gear for the present driving situation, operation with reduced clutch loading is carried out by selecting starting gears lower than the optimum starting gear for the present driving situation.

**Revendications**

1. Procédé pour faire fonctionner un accouplement à friction automatisé, dans lequel une sollicitation de l'accouplement correspondant à une fourniture d'énergie est déterminée et un fonctionnement de l'accouplement est commandé en fonction de la sollicitation déterminée de l'accouplement, **caractérisé en ce qu'**une sollicitation moyenne de l'accouplement, rapportée à un temps de fonctionnement en patinage de l'accouplement, est déterminée, et qu'en cas de constatation d'une sollicitation de l'accouplement inférieure à une plage de valeurs limites prédéfinie, un fonctionnement avec une sollicitation accrue de l'accouplement est ensuite commandé, un fonctionnement avec une sollicitation réduite de l'accouplement en cas de constatation d'une sollicitation de l'accouplement supérieure à la plage de valeurs limites étant commandé à chaque fois jusqu'à ce que la plage de valeurs limites soit de nouveau atteinte.

2. Procédé selon la revendication 1, **caractérisé en ce que** la sollicitation moyenne de l'accouplement est déterminée au moyen de la fourniture d'énergie moyenne dans l'accouplement.

3. Procédé selon la revendication 1 ou 2, **caractérisé en ce que** la sollicitation moyenne de l'accouplement est déterminée par le biais du comportement opérationnel de l'accouplement.

4. Procédé selon la revendication 3, **caractérisé en ce qu'**une sollicitation moyenne de l'accouplement qui est inférieure à la plage de valeurs limites est déterminée par le biais du comportement de broutage de l'accouplement.

5. Procédé selon au moins l'une des revendications 1 à 4, **caractérisé en ce qu'**une sollicitation moyenne de l'accouplement qui est supérieure à la plage de valeurs limites est déterminée par le biais de l'usure de l'accouplement.

6. Procédé selon au moins l'une des revendications 1 à 5, pour un accouplement à friction qui coopère avec une boîte de vitesses automatique ou automatisée comprenant plusieurs rapports de démarrage pouvant être sélectionnés automatiquement en fonction de la situation de conduite actuelle, **caractérisé en ce qu'**un fonctionnement avec une sollicitation accrue de l'accouplement est réalisé en sélectionnant des rapports de démarrage qui se trouvent au-dessus du rapport de démarrage optimal pour la situation de conduite actuelle et un fonctionnement avec une sollicitation réduite de l'accouplement est réalisé en sélectionnant des rapports de démarrage qui se trouvent au-dessous du rapport de démarrage optimal pour la situation de conduite actuelle.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005057039 A
- DE 3334725 A1
- DE 10312088 A1